# EUROPEAN PATENT SPECIFICATION

(11) **EP 1 797 311 B1**
(45) Date of publication and mention of the grant of the patent: **24.12.2008**
(21) Application number: 05817301.4
(22) Date of filing: 23.09.2005
(51) Int. Cl.: F02K 1/82, F02K 1/38, F02K 1/36, B64D 33/04

(54) **QUIET CHEVRON/TAB EXHAUST EDUCTOR SYSTEM**
STILLES CHEVRON/TAB-ABFALLEDUKTORSYSTEM
EJECTEUR D'ECHAPPEMENT A VOLETS/CHEVRONS SILENCIEUX

(30) Priority: 23.09.2004 US 613002 P; 25.01.2005 US 43228
(43) Date of publication of application: 20.06.2007
(73) Proprietor: Honeywell International Inc., Morristown NJ 07960 (US)
(72) Inventor: SHEORAN, Yogendra, Y., Scottsdale, AZ 85260 (US); JUDD, Zedic, D., Phoenix, AZ 85008 (US); BROWN, Daniel, V., Surprise, AZ 85379 (US)
(74) Representative: Hucker, Charlotte Jane
(86) International application number: PCT/US2005/034194
(87) International publication number: WO 2006/034462

(56) References cited:
- EP-A- 0 743 247
- EP-A- 0 913 567
- EP-A- 0 984 152
- US-A- 4 052 847
- US-A- 5 265 408
- US-A1- 2002 139 120
- US-A1- 2004 060 278

## Description

### CROSS-REFERENCE TO RELATED APPLICATION

This application claims the benefit of U.S. Provisional Application No. 60/613,002, filed September 23, 2004 (Attorney Docket No. H0008740--3136).

### TECHNICAL FIELD

The present invention relates to auxiliary power units and, more particularly, to low cost quiet exhaust eductor systems for use with auxiliary power units.

### BACKGROUND

Many modem aircraft are equipped with an airborne auxiliary power unit ("APU") that generates and provides electrical and pneumatic power to various parts of the aircraft for such tasks as environmental control, lighting, powering electronics, main engine starting, etc. It is known that cooling the APU oil and engine externals increases APU system reliability. Some systems use cooling fans to accomplish this, however, cooling fans increase costs, weight, and contribute to the noise levels around the APU. Exhaust eductors are increasingly being used in APU gas turbine applications to cool, for example, APU compartment air, and/or gearbox and generator oil. In cases with increased cooling flow demand for higher generator loads, mixer nozzles have been used to increase eductor pumping and lower exhaust noise relative to conical nozzles.

Traditional lobed mixer nozzles are configured to look like a daisy and promote increased mixing and thereby increase eductor pumping of entrained air. This increased mixing is achieved in part by generation of streamwise vorticity by the mixer lobe geometry that protrudes into the secondary flow stream. These lobed mixer designs can be expensive to fabricate. The market is demanding lower cost engine systems that are quieter than previous systems.

Accordingly, there is a need for an APU exhaust eductor system that provides a mixer nozzle that is both low cost and quiet. Furthermore, other desirable features and characteristics of the present invention will become apparent from the subsequent detailed description and the appended claims, taken in conjunction with the accompanying drawings and the foregoing technical field and background.
EP-A-0743247 discloses a passive cooling device for cooling an APU on an aircraft.
US 2002/139120 discloses a tortuous quiet exhaust eductor system.

The present invention provides a means for inducing (educting) a "passive" secondary flow stream using the energy of the primary stream with a chevron/tab mixer vortex action. The chevron/tabs create a pair of vortices from the forced primary flow stream from the APU to entrain the stationary secondary flow stream thus promoting eductor action (eduction).

According to the present invention there is provided an exhaust eductor system comprising:
a primary exhaust nozzle configured to transport an active flow stream;
a vacuum passage surrounding the primary exhaust nozzle and configured to transport a passive flow stream, and
an exhaust mixing duct in flow communication with the primary exhaust nozzle and the vacuum passage, the exhaust mixing duct adapted to receive the active flow stream from the primary exhaust nozzle, and to receive the passive flow stream from the vacuum passage,
the system being characterised by comprising:
   a plurality of tabs extending from a rear perimeter of the primary exhaust nozzle, wherein the tabs are arranged to be bent at an angle into the active flow stream to provide improved entrainment of the passive flow stream.

According to the present invention there is also provided an exhaust eductor system for use with an auxiliary power unit (APU) positioned within an APU compartment of an aircraft, the system comprising:
a primary exhaust nozzle having a first end coupled to the APU and a second end, the primary exhaust nozzle being configured to transport a primary exhaust flow stream of the APU;
a vacuum passage surrounding the primary exhaust nozzle and configured to transport a passive flow stream; and
an exhaust mixing duct in flow communication with the primary exhaust nozzle and the vacuum passage, the exhaust mixing duct configured to receive the primary exhaust flow stream from the primary exhaust nozzle and to receive the passive flow stream from the vacuum passage,
the system being characterised by comprising:
   a first pluality of tabs extending from the second end of the primary exhaust nozzle, wherein the tabs are arranged to be bent at an angle into the primary exhaust flow stream to provide improved entrainment of the passive flow stream.

Other independent features and advantages will become apparent from the following detailed description, taken in conjunction with the accompanying drawings which illustrate, by way of example, the principles of the invention.

The following drawings are illustrative of the particular embodiments of the invention and therefore do not limit its scope. They are presented to assist in providing a proper understanding of the invention. The drawings are not to scale and are intended for use in conjunction with the explanations in the following detailed descriptions. The present invention will hereinafter be described in conjunction with the appended drawings, wherein like reference numerals denote like elements, and;

FIG. 1 shows one embodiment of an auxiliary power unit ("APU") with an exhaust eductor system installed in an APU compartment in the tailcone of the aircraft;

FIG. 2 shows one embodiment of the eductor exhaust system of FIG. 1;

FIG. 3 shows one embodiment of triangular cutout tabs;

FIG. 4 shows one embodiment of rectangular cutout tabs;

FIGS. 5 is a simplified cross-sectional view and 6 is an end view showing another embodiment of an exhaust eductor system;

FIG. 7 is a simplified cross-sectional view and FIG. 8 is an end view showing another embodiment of an exhaust eductor system;

FIGS. 9 is a simplified cross-sectional view and 10 is an end view showing another embodiment of an exhaust eductor system;

FIGs. 11 is a simplified cross-sectional view and 12 is an end view showing another embodiment of an exhaust eductor system;

FIGs. 13 is a simplified cross-sectional view and 14 is an end view showing another embodiment of an exhaust eductor system;

FIGs. 15 is a simplified cross-sectional view and 16 is an end view showing another embodiment of an exhaust eductor system;

FIGs. 17 is a simplified cross-sectional view and 18 is an end view showing another embodiment of an exhaust eductor system;

FIGs. 19 is a simplified cross-sectional view and 20 is an end view showing another embodiment of an exhaust eductor system;

FIGs. 21 is a simplified cross-sectional view and 22 is an end view showing another embodiment of an exhaust eductor system;

FIGs. 23 is a simplified cross-sectional view and 24 is an end view showing another embodiment of an exhaust eductor system;

FIG. 25 is a simplified cross-sectional view of an APU installation having a eductor with no mechanical connection between the primary and secondary flow streams and an oil cooler mounted away from the eductor; and

FIG. 26 is a simplified cross-sectional view of an APU installation having an eductor system with the primary and secondary flow streams mixing within an enclosed plenum to which is attached an oil cooler.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

The present invention is directed to a simple, low cost exhaust eductor system for use with an auxiliary power unit ("APU") that provides increased flow stream mixing and lowers noise levels. An embodiment of the invention includes a means of inducing (educting) a passive flow stream using the energy of a forced APU primary flow stream and a chevron/tab mixer vortex action. The chevron/tabs create a pair of vortices from the forced APU primary flow stream to entrain stationary secondary flow thus promoting eductor action (eduction). The system uses chevron/tab mixers in a novel eductor primary nozzle to entrain surrounding still air that is drawn in by the forced APU primary air into a quiet eductor. The entrained air may be used for the purposes of cooling the APU compartment air, oil cooler or the primary exhaust itself or for all these purposes simultaneously.

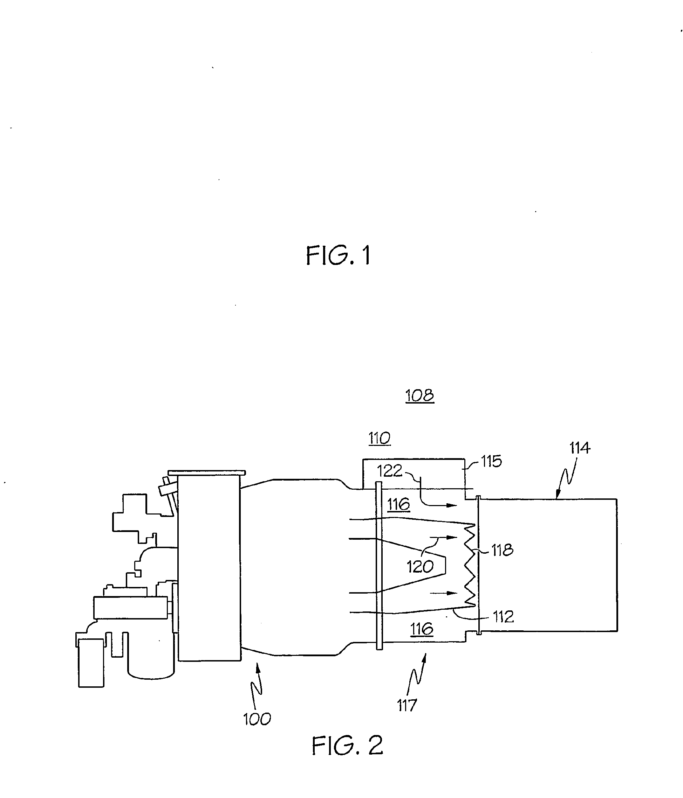

FIG. 1 shows one embodiment of an APU 100 with an exhaust eductor system 110 installed in an APU compartment 108 in the tailcone 102 of an aircraft. Attached to the APU 100 is an APU inlet duct 104 that provides combustion and bleed air to the APU 100, an APU compartment air inlet duct 106 that provides cooling air to the APU compartment 108, and the exhaust eductor system 110 that provides APU compartment ventilation. The exhaust eductor system 110 may also entrain secondary air through an APU-mounted oil cooler (not shown) after it has effectively cooled the APU compartment 108.

FIG. 2 shows one embodiment of the eductor exhaust system 110 that includes a primary exhaust nozzle 112 having a plurality of chevrons or tabs 118 around a rear perimeter, and eductor plenum 117 and an eductor mixing duct 114. The primary exhaust nozzle 112 is configured to carry the primary exhaust flow stream 120 from the APU 100. A vacuum passage 116 is formed between the primary exhaust nozzle 112 and the eductor plenum 117. One end of the vacuum passage 116 is in fluid communication with an oil cooler 115 and with the APU compartment 108. The other end of vacuum passage 116 is near the plurality of chevron/tabs 118 along a second end of the primary exhaust nozzle 112 and in communication with the eductor mixing duct 114. The primary exhaust nozzle 112 with the chevron/tabs 118 is configured to force the primary flow stream 120 to provide eductor pumping, by drawing air out of the vacuum passage 116 by mixing in the eductor mixing duct 114, thereby bringing in air from the APU compartment 108 to create a passive flow stream 122 through the vacuum passage 116. The tabs 118 are bent into the primary exhaust flow stream 120 and generate streamwise vorticity that promotes increased eductor pumping, increasing the flow of the passive flow stream 122. The enhanced mixing of the forced flow stream 120 and the passive flow stream 122 also provides acoustic benefit by reducing shear layer strength, which has been shown to reduce the exhaust noise levels. The exhaust eductor system 110 pulls in air from the APU compartment air 108 that may be used to cool the gearbox and generator oil with an oil cooler 115, which has been traditionally done with a fan. The plenum 117 forces all the air 122 to be drawn over the oil cooler 115.

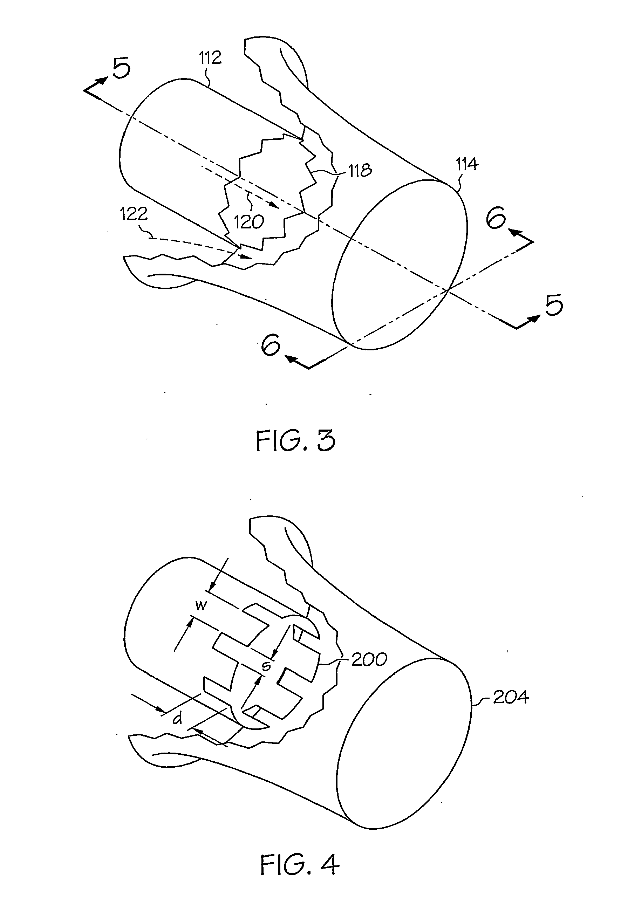

The nozzle 112 and exhaust duct 114 of the eductor exhaust system 110 may each have many cross-sectional shapes including rectangle, circular, elliptical, racetrack, star, etc. The tabs 118 can be used on any of the eductor exhaust system 110 cross-sectional shapes. The tab 118 shape can range from triangular to rectangular including parallelograms. FIG. 3 is a perspective view of the eductor exhaust system 110 having a circular primary exhaust nozzle 112 and exhaust duct 114. The tabs 118 shown are triangular and can be designed with a variety of features, such as "turn-down" into the primary exhaust flow stream 120 and "turn-up" into the passive flow stream 122 or a combination of both. The permutation and combinations of these features can be very large. It is possible that most of the tab features would contribute in varying amounts to the generation and to the strength of the vortices and thereby the amount of eductor pumping. The preferred embodiment is turning the chevrons into the primary flow as shown in FIG. 2 and achieving this by designing a slightly converging wall primary nozzle.

In some configurations, the base of one tab contacts the base of a neighboring tab around the perimeter of the primary nozzle, such as triangular tabs 118 shown in FIG. 3. In other configurations, the base of one tab need not contact the base of a neighboring tab around the perimeter of the primary nozzle. FIG. 4 shows one embodiment of rectangular cutout tabs 200 that are spaced apart around the perimeter of the circular primary nozzle 202 and an exhaust duct 204. While specific examples of spacing s, depth d and width w have been given, the dimension may vary depending on the size of the primary nozzle and other design considerations. The tab size can be uniform or variable for generating uneven vortex strengths and turbulent length scales. The tabs can be bent at any angle into the primary exhaust flow stream, or alternatively into both the secondary and primary flow streams, or remain unbent (aligned with the primary duct walls), such bending may be uniform or nonuniform around the rear perimeter of the nozzle. In one embodiment, the bend angle is between +90 and -90 degrees, either bending into the primary flow stream or into both the secondary and primary flow streams.

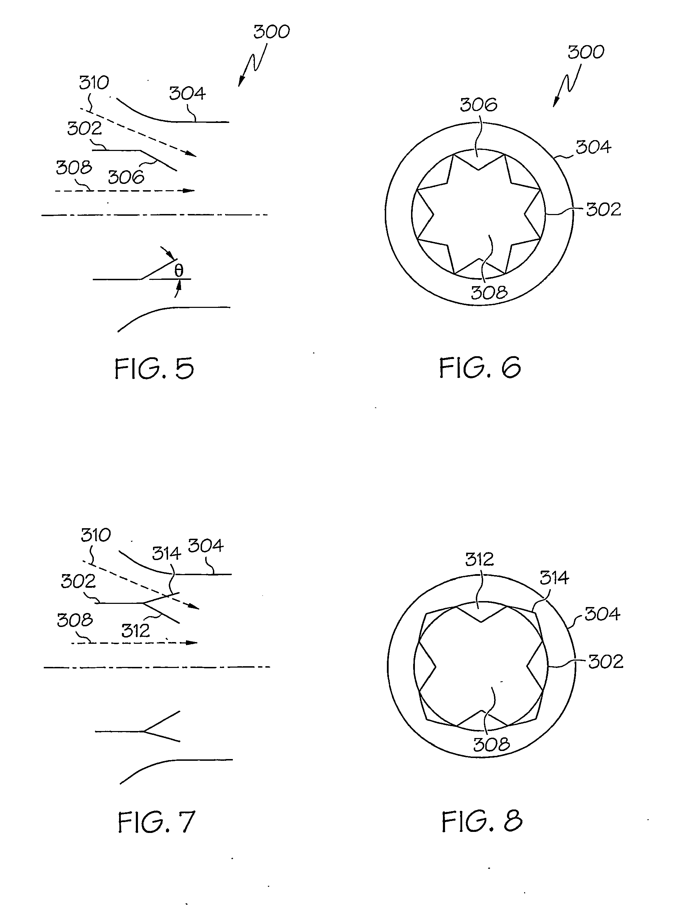

FIG. 5 is a simplified cross-sectional view taken at 5-5 of FIG. 3 and FIG. 4 is an end view taken at 6-6 of FIG. 3 showing one embodiment of an exhaust eductor system 300 having a circular primary nozzle 302 and a circular exhaust duct 304. A plurality of triangular tabs 306, in this case eight tabs 306, are deployed around the rear perimeter of the circular primary nozzle 302 and are bent down into the primary exhaust flow stream 308 (the shaded area in FIG. 6) at a constant angle θ, which may vary from +90 to -90 degrees. The tabs 306 on the primary exhaust nozzle 302 generate vortices that promote mixing between the primary exhaust flow stream 308 and the secondary flow stream 310 to entrain more secondary flow and lower exhaust noise levels relative to an eductor without chevron/tabs.

FIGs. 7 and 8 show another embodiment of an exhaust eductor system similar to that shown in FIGs. 5 and 6 except that a first portion of the tabs 312 are bent into the primary exhaust flow stream 308 and a second portion of the tabs 314 are bent into the secondary flow stream 310. In the figures, the tabs 312 and 314 alternate with every other tab being bent in the same direction. Also, the bend angle of each of the tabs may be different, with tabs 312 in the first portion being bent at a first angle and tabs 314 in the second portion being bent at a second angle. The tabs 314 need not be of uniform size but may vary in size around the circumference of the primary nozzle 302.

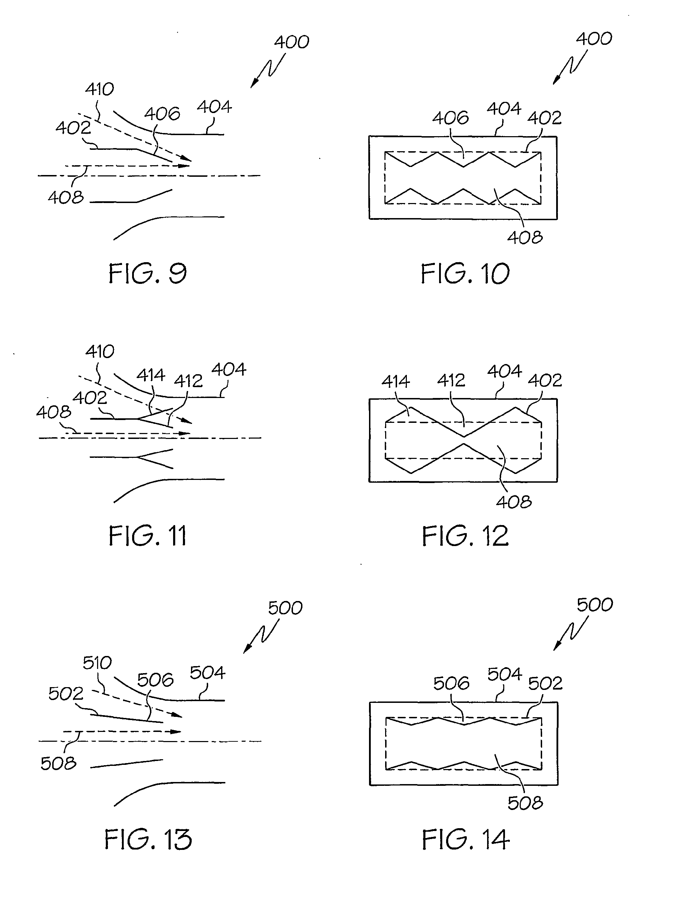

FIG. 9 is a simplified cross-sectional view and FIG. 10 is an end view showing one embodiment of an exhaust eductor system 400 having a rectangular primary nozzle 402 and a rectangular exhaust duct 404. A plurality of triangular tabs 406, in this case six tabs 406, are deployed around the upper and lower rear perimeter of the rectangular primary nozzle 402 and are bent into the primary exhaust flow stream 408 (the shaded area in FIG. 10) at a constant angle, which may vary from +90 to -90 degrees. The tabs 406 on the primary exhaust nozzle 402 generate vortices that promote mixing between the primary exhaust flow stream 408 and the secondary flow stream 410 to maximize the entrainment of secondary flow and to lower exhaust noise levels. The spacing between tabs 406 as well as the size of tabs 406 can vary.

FIGs. 11 and 12 show another embodiment of an exhaust eductor system similar to that shown in FIGs. 9 and 10 except that a first portion of the plurality of triangular tabs 412 are bent into the primary exhaust flow stream 408 and a second portion of the plurality of triangular tabs 414 are bent into the secondary flow stream 410. In the figures, the plurality of triangular tabs 412 and 414 alternate with outer tabs 414 being bent in the one direction toward the secondary flow stream 410 and the center tabs 412 being bent in the second direction toward the primary exhaust flow stream 408. Also, the bend angle each of tabs may be different, with tabs 412 in the first portion being bent at a first angle and tabs 414 in the second portion being bent at a second angle.

FIG. 13 is a simplified cross-sectional view and FIG. 14 is an end view showing another embodiment of an exhaust eductor system 500 having a rectangular primary nozzle 502 and a rectangular exhaust duct 504. A plurality of triangular tabs 506, in this case six tabs 506, are deployed around the upper and lower rear perimeter of the rectangular primary nozzle 502. In this case, the triangular tabs 506 are not bent into the primary exhaust flow stream 508. The rectangular primary nozzle 502 itself has a slight taper to it and the plurality of triangular tabs 506 extend directly from the end of the rectangular primary nozzle 502, placing them slightly into the primary exhaust flow stream 508 (the shaded area in FIG. 14). The tabs 506 on the primary exhaust nozzle 502 generate vortices that promote mixing between the primary exhaust flow stream 508 and the secondary flow stream 510 to entrain more secondary flow and lower exhaust noise levels relative to a conical nozzle having no tabs.

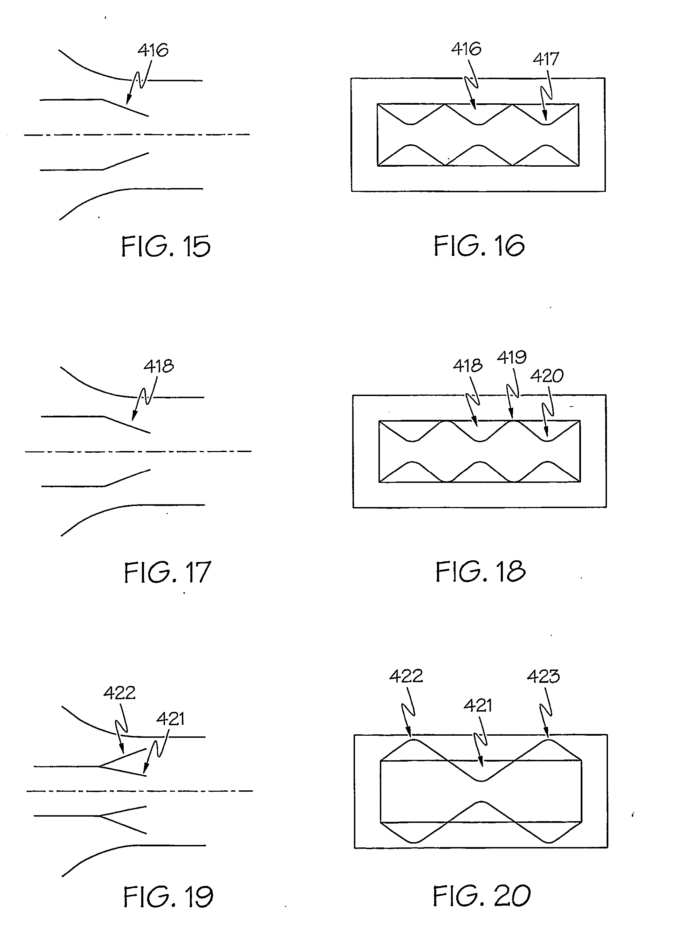

FIG. 15 is a simplified cross-sectional view and FIG. 16 is an end view showing another embodiment of an exhaust eductor system 400 having a rectangular primary nozzle 402 and a rectangular exhaust duct 404. A plurality of triangular tabs 416, in this case six tabs 416, are deployed around the upper and lower rear perimeter of the rectangular primary nozzle 402 and are bent into the primary flow stream 408 at a constant angle, which may vary from +90 to -90 degrees. The tabs 416 on the primary exhaust nozzle 402 have rounded, or radiused tips 417 that serve to reduce high frequency mixing noise common with chevron/tab mixer nozzles and lower the risk of injury to those working around the nozzle.

FIG. 17 is a simplified cross-sectional view and FIG. 18 is an end view showing another embodiment of an exhaust eductor system 400 having a rectangular primary nozzle 402 and a rectangular exhaust duct 404. A plurality of triangular tabs 418, in this case six tabs 418, are deployed around the upper and lower rear perimeter of the rectangular primary nozzle 402 and are bent into the primary flow stream 408 at a constant angle, which may vary from +90 to -90 degrees. The tabs 418 on the primary exhaust nozzle 402 have rounded, or radiused tips 420 in addition to rounded or radiused roots 419. The radiused tips and roots serve to reduce high frequency mixing noise and lower the risk of injury to those working around the nozzle.

FIGs. 19 and 20 show another embodiment of an exhaust eductor system similar to that shown in FIGs. 15 and 16 except that a first portion of the plurality of triangular tabs 421 are bent into the primary exhaust flow stream 408 and a second portion of the plurality of triangular tabs 422 are bent into the secondary flow stream 410. In the figures, the plurality of triangular tabs 421 and 422 alternate with outer tabs 422 being bent in the one direction toward the secondary flow stream 410 and the center tabs 421 being bent in the second direction toward the primary exhaust flow stream 408. Also, the bend angle each of tabs may be different, with tabs 421 in the first portion being bent at a first angle and tabs 422 in the second portion being bent at a second angle. Both the tabs 421 and 422 have rounded, or radiused tips to lower noise levels at high frequencies and reduce the risk of injury while working around the nozzle.

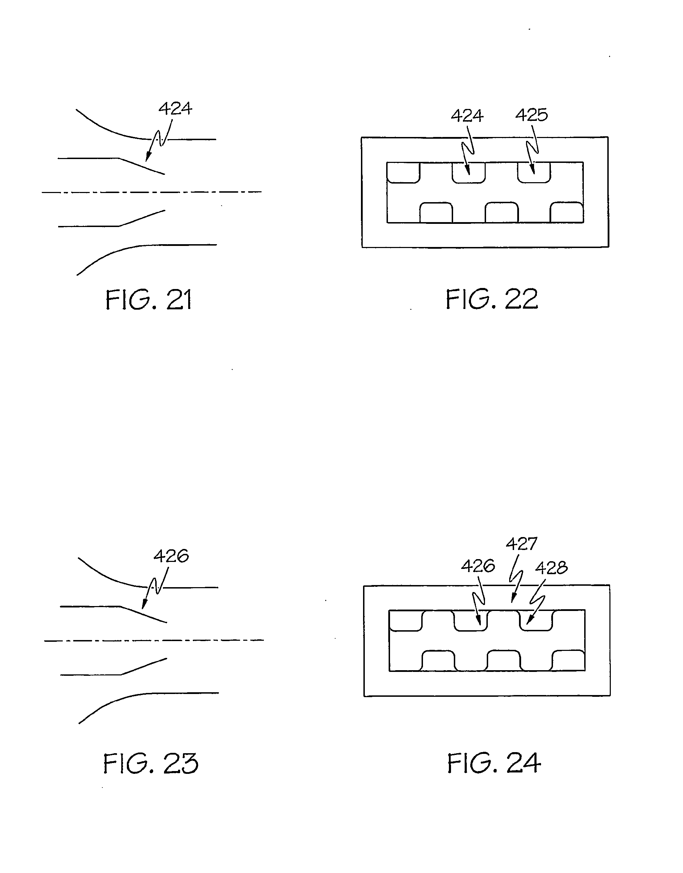

FIG. 21 is a simplified cross-sectional view and FIG. 22 is an end view showing another embodiment of an exhaust eductor system 400 having a rectangular primary nozzle 402 and a rectangular exhaust duct 404. A plurality of rectangular tabs 424, in this case six tabs 424, are deployed around the upper and lower rear perimeter of the rectangular primary nozzle 402 and are bent into the primary flow stream 408 at a constant angle, which may vary from +90 to -90 degrees. The tabs 424 on the primary exhaust nozzle 402 have rounded, or radiused corners 425. The radiused corners serve to reduce high frequency mixing noise and lower the risk of injury to those working around the nozzle.

FIG. 23 is a simplified cross-sectional view and FIG. 24 is an end view showing another embodiment of an exhaust eductor system 400 having a rectangular primary nozzle 402 and a rectangular exhaust duct 404. A plurality of rectangular tabs 426, in this case six tabs 426, are deployed around the upper and lower rear perimeter of the rectangular primary nozzle 402 and are bent into the primary flow stream 408 at a constant angle, which may vary from +90 to -90 degrees. The tabs 426 on the primary exhaust nozzle 402 have rounded, or radiused corners at both the roots 427 and tips 428 of the tabs. The radiused corners serve to reduce high frequency mixing noise and lower the risk of injury to those working around the nozzle.

All chevron/tab geometries (shape, size, angle, spacing, etc.) shown and described herein may be used on primary nozzles of any cross-sectional shape with exhaust ducts of any cross-sectional shape.

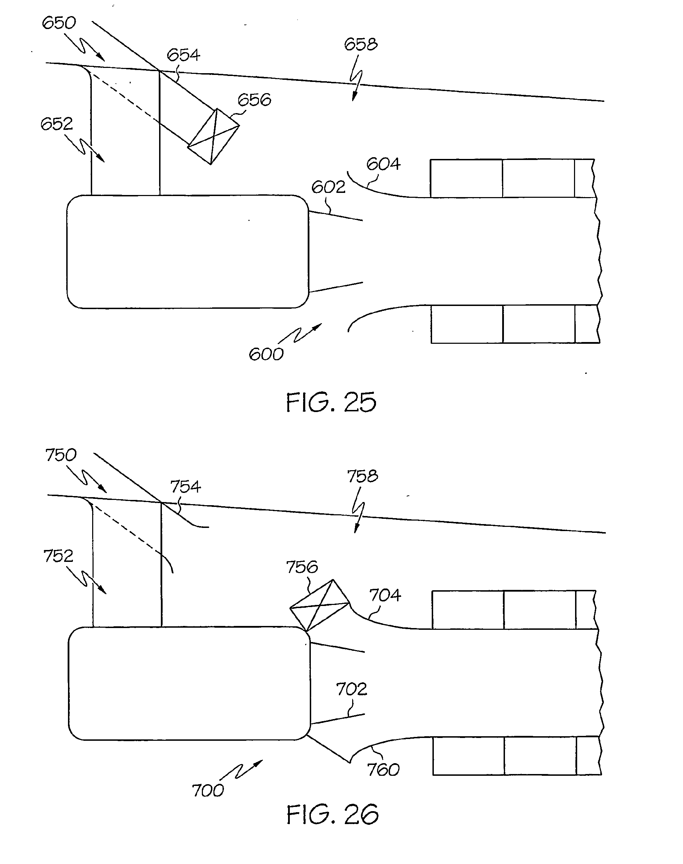

FIG. 25 is a simplified cross section of an APU installation with eductor 600 wherein no mechanical connection is maintained between the primary nozzle 602 and the secondary exhaust duct 604, but the relative positions of the two are set by other means. Outside air enters the cooling system through a door 650 in the side of the airplane continuing through the cooling duct 654 to the oil cooling heat exchanger 656. Air exiting the heat exchanger 656 enters the APU compartment 658 to provide compartment cooling before being drawn into the tailpipe by the eductor 600. APU inlet air is drawn from the door 650 through the inlet duct 652 into the APU. Such air after passing through the engine forms the eductor primary flow stream through primary nozzle 602.

FIG. 26 is a simplified cross section of an APU installation with eductor 700 wherein the primary nozzle 702 and secondary exhaust duct 704 are combined within a common plenum, or chamber 760. Oil cooling heat exchanger 756 is mounted on the plenum. Outside air enters door 750 and is ducted to the APU compartment 758 through dump diffuser 754 to provide compartment cooling. Air from APU compartment 758 is drawn through the oil heat exchanger 756 by action of the APU eductor 700. The entrained cooling flow is then ducted out the airplane through exhaust duct 704. As in FIG. 25, air enters the APU through door 750 and inlet duct 752.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An exhaust eductor system (110) comprising:
a primary exhaust nozzle (112) configured to transport an active flow stream (120);
a vacuum passage (116) surrounding the primary exhaust nozzle (112) and configured to transport a passive flow stream (122), and
an exhaust mixing duct (114) in flow communication with the primary exhaust nozzle (112) and the vacuum passage (116), the exhaust mixing duct (114) adapted to receive the active flow stream (120) from the primary exhaust nozzle (112), and to receive the passive flow stream (122) from the vacuum passage (116),
the system being **characterised by** comprising:
a plurality of tabs (118, 200) extending from a rear perimeter of the primary exhaust nozzle (112), wherein the tabs (118, 200) are arranged to be bent at an angle into the active flow stream (120) to provide improved entrainment of the passive flow stream (122).

2. The system of claim 1, wherein the plurality of tabs (118, 200)) create streamwise vorticity.

3. The system of claim 1, wherein the angle of the tabs (118, 200) is between +90 and -90 degrees relative to a downstream pointing axis.

4. The system of claim 1, wherein the active flow stream (120) is a primary exhaust flow stream from an auxiliary power unit (APU) (100).

5. The system of claim 1, wherein the corners, either at the roots or the tips, or both, of the tabs (118, 200) geometries are rounded or radiused.

6. The system of claim 1, wherein the spacing varies between the tabs (118, 200).

7. The system of claim 1, wherein the passive flow stream (122) provides cooling to an APU compartment (108).

8. The system of claim 1, wherein the passive flow stream (122) provides cooling to oil used in an APU (100) and/or a generator.

9. An exhaust eductor system (110) for use with an auxiliary power unit (APU) (100) positioned within an APU compartment (108) of an aircraft, the system comprising:
a primary exhaust nozzle (112) having a first end coupled to the APU (100) and a second end, the primary exhaust nozzle (112) being configured to transport a primary exhaust flow stream (120) of the APU (100);
a vacuum passage (116) surrounding the primary exhaust nozzle (112) and configured to transport a passive flow stream (122); and
an exhaust mixing duct (114) in flow communication with the primary exhaust nozzle (112) and the vacuum passage (116), the exhaust mixing duct (114) configured to receive the primary exhaust flow stream (120) from the primary exhaust nozzle and to receive the passive flow stream (122) from the vacuum passage (116),
the system being **characterised by** comprising:
a first plurality of tabs (118, 200, 312, 412) extending from the second end of the primary exhaust nozzle (112), wherein the tabs (118, 200, 312, 412) are arranged to be bent at an angle into the primary exhaust flow stream (120) to provide improved entrainment of the passive flow stream (122).

10. The system of claim 9, wherein the angle of the tabs (118, 200, 312, 412) is between +90 and -90 degrees.

11. The system of claim 9, wherein the streamwise vorticity from the first plurality of tabs (118, 200, 312, 412) enhances the mixing of the primary exhaust flow stream (120) and the passive flow stream (122).

12. The system of claim 9, wherein increased streamwise vorticity increases the passive flow stream (122) through the vacuum passage (116) and lowers exhaust noise levels.

13. The system of claim 9, further comprising a second plurality of tabs (314, 414) extending from the second end of the primary exhaust nozzle (112), wherein the second plurality of tabs (314, 414) are bent toward the passive flow stream (122).

14. The system of claim 9, wherein a first portion (412) of the first plurality of tabs (424, 426) are bent at a first angle toward the primary exhaust flow stream (120) and a second portion (414) of the first plurality of tabs (424, 426) are bent at a second angle toward the passive flow stream (122).

## Patentansprüche

1. Abgaseduktorsystem (110), das Folgendes umfasst:
eine Primärabgasdüse (112), die zur Beförderung eines aktiven Flussstroms (120) konfiguriert ist;
einen die Primärabgasdüse (112) umgebenden Vakuumdurchgang (116), der zur Beförderung eines passiven Flussstroms (122) konfiguriert ist, und
einen Abgasmischkanal (114), der mit der Primärabgasdüse (112) und dem Vakuumdurchgang (116) in Strömungsverbindung steht, wobei der Abgasmischkanal (114) zur Aufnahme des aktiven Flussstroms (120) von der Primärabgasdüse (112) und zur Aufnahme des passiven Flussstroms (122) von dem Vakuumdurchgang (116) ausgeführt ist,
**dadurch gekennzeichnet, dass** das System
mehrere Nasen (118, 200) umfasst, die sich von dem hinteren Umfang der Primärabgasdüse (112) erstrecken, wobei die Nasen (118, 200) zur Biegung in einem Winkel in den aktiven Flussstrom (120) zwecks Bereitstellung einer verbesserten Mitnahme des passiven Flussstroms (122) angeordnet sind.

2. System nach Anspruch 1, wobei die mehreren Nasen (118, 200) eine stromweise Verwirbelung erzeugen.

3. System nach Anspruch 1, wobei der Winkel der Nasen (118, 200) zwischen +90 und -90 Grad bezüglich einer stromabwärts weisenden Achse beträgt.

4. System nach Anspruch 1, wobei der aktive Flussstrom (120) ein Primärabgasflussstrom von einem Hilfsaggregat (APU - auxiliary power unit) (100) ist.

5. System nach Anspruch 1, wobei die Ecken, entweder an den Füßen oder an den Spitzen oder an beiden, der Geometrien der Nasen (118, 200) gerundet oder abgerundet sind.

6. System nach Anspruch 1, wobei der Abstand zwischen den Nasen (118, 200) variiert.

7. System nach Anspruch 1, wobei der passive Flussstrom (122) Kühlung für eine APU-Kammer (108) bereitstellt.

8. System nach Anspruch 1, wobei der passive Flussstrom (122) Kühlung für in einem APU (100) und/oder in einem Generator verwendetes Öl bereitstellt.

9. Abgaseduktorsystem (110) zur Verwendung mit einem Hilfsaggregat (APU) (100), das in einer APU-Kammer (108) eines Flugzeugs positioniert ist, wobei das System Folgendes umfasst:
eine Primärabgasdüse (112) mit einem mit dem APU (100) verbundenen ersten Ende und einem zweiten Ende, wobei die Primärabgasdüse (112) zur Beförderung eines Primärabgasflussstroms (120) von dem APU (100) konfiguriert ist;
einen Vakuumdurchgang (116), der die Primärabgasdüse (112) umgibt und zur Beförderung eines passiven Flussstroms (120) konfiguriert ist; und
einen Abgasmischkanal (114), der mit der Primärabgasdüse (112) und dem Vakuumdurchgang (116) in Strömungsverbindung steht, wobei der Abgasmischkanal (114) zur Aufnahme des Primärabgasflussstroms (120) von der Primärabgasdüse und zur Aufnahme des passiven Flussstroms (122) von dem Vakuumdurchgang (116) ausgeführt ist,
**dadurch gekennzeichnet, dass** das System
mehrere erste Nasen (118, 200, 312, 412) umfasst, die sich von dem zweiten Ende der Primärabgasdüse (112) erstrecken, wobei die Nasen (118, 200, 312, 412) zur Biegung in einem Winkel in den Primärabgasflussstrom (120) zwecks Bereitstellung einer verbesserten Mitnahme des passiven Flussstroms (122) angeordnet sind.

10. System nach Anspruch 9, wobei der Winkel der Nasen (118, 200, 312, 412) zwischen +90 und -90 Grad beträgt.

11. System nach Anspruch 9, wobei die stromweise Verwirbelung von den mehreren ersten Nasen (118, 200, 312, 412) das Vermischen des Primärabgasflussstroms (120) und des passiven Flussstroms (122) verbessert.

12. System nach Anspruch 9, wobei die verstärkte stromweise Verwirbelung den passiven Flussstrom (122) durch den Vakuumdurchgang (116) verstärkt und Abgaslärmpegel verringert.

13. System nach Anspruch 9, das weiterhin mehrere zweite Nasen (314, 414) umfasst, die sich von dem zweiten Ende der Primärabgasdüse (112) erstrecken, wobei die mehreren zweiten Nasen (314, 414) zu dem passiven Flussstrom (122) gebogen sind.

14. System nach Anspruch 9, wobei ein erster Teil (412) der mehreren ersten Nasen (424, 426) in einem ersten Winkel zu dem Primärabgasflussstrom (120) gebogen ist und ein zweiter Teil (414) der mehreren ersten Nasen (424, 426) in einem zweiten Winkel zu dem passiven Flussstrom (122) gebogen ist.

## Revendications

1. Système éducteur d'échappement (110) comprenant :
une tuyère d'échappement primaire (112) configurée de manière à transporter un flux d'écoulement actif (120) ;
un passage à dépression (116) entourant la tuyère d'échappement primaire (112) et configuré de manière à transporter un flux d'écoulement passif (122) ; et
un conduit mélangeur d'échappement (114) en communication fluidique avec la tuyère d'échappement primaire (112) et le passage à dépression (116), le conduit mélangeur d'échappement (114) étant adapté pour accueillir le flux d'écoulement actif (120) de la tuyère d'échappement primaire (112) et le flux d'écoulement passif (122) du passage à dépression (116),
le système étant **caractérisé en ce qu'**il comprend :
une pluralité de volets (118,200) s'étendant à partir d'un périmètre arrière de la tuyère d'échappement primaire (112), lesdits volets (118,200) étant agencés de manière à être coudés à un angle dans le flux d'écoulement actif (120) pour améliorer l'entraînement du flux d'écoulement passif (122).

2. Système selon la revendication 1, dans lequel la pluralité de volets (118,200) crée un effet tourbillonnaire dans le flux d'écoulement.

3. Système selon la revendication 1, dans lequel l'angle des volets (118,200) est compris entre +90 et -90 degrés par rapport à l'axe pointant vers l'aval.

4. Système selon la revendication 1, dans lequel le flux d'écoulement actif (120) est un flux d'échappement primaire d'un groupe auxiliaire (APU) (100).

5. Système selon la revendication 1, dans lequel les angles, aux pieds ou aux pointes ou aux pieds et aux pointes des géométries des volets (118,200) sont arrondis ou adoucis.

6. Système selon la revendication 1, dans lequel l'espacement varie entre les volets (118,200).

7. Système selon la revendication 1, dans lequel le flux d'écoulement passif (122) assure le refroidissement du compartiment d'un groupe auxiliaire (APU) (108).

8. Système selon la revendication 1, dans lequel le flux d'écoulement passif (122) assure le refroidissement de l'huile utilisée dans un groupe auxiliaire (APU) (100) et/ou un générateur.

9. Système éducteur d'échappement (110) destiné à être utilisé avec un groupe auxiliaire (APU) (100) logé dans un compartiment de groupe auxiliaire de bord (APU) (108) d'un aéronef, le système comprenant :
une tuyère d'échappement primaire (112) comprenant une première extrémité accouplée au groupe auxiliaire (APU) (100) et une deuxième extrémité, la tuyère d'échappement primaire (112) étant configurée de manière à transporter un flux d'échappement primaire (120) du groupe auxiliaire (APU) (100) ;
un passage à dépression (116) entourant la tuyère d'échappement primaire (112) et configuré de manière à transporter un flux d'écoulement passif (122) ; et
un conduit mélangeur d'échappement (114) en communication fluidique avec la tuyère d'échappement primaire (112) et le passage à dépression (116), le conduit mélangeur d'échappement (114) étant configuré pour accueillir le flux d'échappement primaire (120) de la tuyère d'échappement primaire et le flux d'écoulement passif (122) du passage à dépression (116),
le système étant **caractérisé en ce qu'**il comprend :
une première pluralité de volets (118,200,312,412) s'étendant à partir de la deuxième extrémité de la tuyère d'échappement primaire (112), lesdits volets (118,200,312,412) étant agencés de manière à être coudés à un angle dans le flux d'échappement primaire (120) pour améliorer l'entraînement du flux d'écoulement passif (122).

10. Système selon la revendication 9, dans lequel l'angle des volets (118,200,312,412) est compris entre +90 et -90 degrés.

11. Système selon la revendication 9, dans lequel l'effet tourbillonnaire créé dans le flux d'écoulement par la première pluralité de volets (118,200,312,412) renforce le mélange du flux d'écoulement d'échappement primaire (120) et du flux d'écoulement passif (122).

12. Système selon la revendication 9, dans lequel l'effet tourbillonnaire accru dans le flux d'écoulement accroît le flux d'écoulement passif (122) à travers le passage à dépression (116) et atténue les niveaux de bruit de l'échappement.

13. Système selon la revendication 9, comprenant en outre une deuxième pluralité de volets (314,414) s'étendant à partir de la deuxième extrémité de la tuyère d'échappement primaire (112), dans lequel les volets de la deuxième pluralité de volets (314,414) sont coudés vers le flux d'écoulement passif (122).

14. Système selon la revendication 9, dans lequel les volets d'une première partie (412) de la première pluralité de volets (424,426) sont coudés à un premier angle vers le flux d'échappement primaire (120) et les volets d'une deuxième partie (414) de la première pluralité de volets (424,426) sont coudés à un deuxième angle vers le flux d'écoulement passif (122).
